# EUROPÄISCHE PATENTSCHRIFT

(11) **EP 2 353 960 B1**
(45) Veröffentlichungstag und Bekanntmachung des Hinweises auf die Patenterteilung: **22.10.2014**
(21) Anmeldenummer: 11152890.7
(22) Anmeldetag: 01.02.2011
(51) Int. Cl.: B61D 5/00, B60P 3/22, B65D 88/12

(54) **Schienengebundener Kesselwagen mit Ueberrollschutz**
Rail tank car with rollover protection
Wagon-citerne relié par rails doté d'une protection contre les tonneaux

(30) Priorität: 02.02.2010 CH 1222010
(43) Veröffentlichungstag der Anmeldung: 10.08.2011
(73) Patentinhaber: Wascosa AG, 6005 Luzern (CH); EST Eisenbahn-Systemtechnik GmbH, 88239 Wangen im Allgäu (DE)
(72) Erfinder: Saabel, Irmhild, 6340, Baar (CH); Schneider, Sieghard, 88239, Wangen im Allgäu (DE)
(74) Vertreter: Falk, Urs

(56) Entgegenhaltungen:
- FR-A1- 2 745 278
- JP-A- 7 215 124
- JP-A- 2008 290 570

## Beschreibung

Die Erfindung betrifft einen schienengebundenen Kesselwagen mit Überrollschutz gemäß dem Oberbegriff des Anspruchs 1.

Kesselwagen für den schienengebundenen Transport sehr gefährlicher Güter unter Druck, wie beispielsweise Chlor oder Schwefeldioxid, haben Befüllungs- und Entleerungsventile nur oben am Wagen, und keine sonstigen Öffnungen. Diese Ventile sind im so genannten Chemie-Dom oben mittig auf dem Tank untergebracht. Sie sind auf dem Domsockel, einer üblicherweise kreisrunden Platte aus massivem Stahl, eingeschraubt. Die Ventile ragen oben aus der Kontur des Tanks heraus und gelten als verwundbarste Stelle des Wagens im Falle eines Unfalls, insbesondere beim Umfallen des Wagens oder bei einem Überschlag, wie z.B. infolge einer Entgleisung oder einer so genannten Flankenfahrt (Zusammenstoss zweier Wagen auf einer Weiche im flachen Winkel). Schon in früheren Sicherheitsstudien (z.B. in der sog. Kellerhaus-Studie des deutschen Forschungsministeriums Mitte der 90er Jahre) wurden diese Ventile als gefährdet bzw. empfindlich erkannt und eine Tieferlegung bzw. Versenkung im Tank empfohlen. Eine Versenkung ist allerdings wegen des hohen Drucks mancher Flüssiggase nicht möglich, da eine Einsenkung in die zylindrische Grundform des Tanks zu hohen Spannungsspitzen bzw. zu reduzierter Druckfestigkeit führen würde.

Das Problem besteht darin, dass bei einem Unfall mit Umstürzen oder Überrollen des Wagens die Ventile von Kanten, Pfosten, z.B. Brückenpfeilern oder den Bäumen einer Böschung oder eines Bahndamms, oder anderen formaggressiven Hindernissen abgerissen werden können und dann das Ladegut austreten kann. Einen gewissen Schutz bei diesem Szenario bieten Sicherheits-Rückschlagventile, welche selbst bei Abreissen des Ventilkopfs noch einen Verschluss des Tanks gegen Ausfliessen des Ladeguts sicherstellen sollen. Selbst bei gutem Funktionieren dieser Sicherheits-Rückschlagventile bleibt der Nachteil bestehen, dass eine Entleerung des havarierten Wagens kompliziert ist, wenn die Ventilköpfe abgerissen sind. Ein weiteres bislang ungelöstes Problem besteht darin, dass die Ventilstümpfe in jedem Fall stehen bleiben und eine Lasteinleitung auf diese im weiteren Unfallverlauf zu lokalen Überlastungen der Ventilstümpfe oder der Domsockelbefestigung - einer umlaufenden Schweissnahtverbindung zum Tank - stattfindet. Dadurch wird der Domsockel in den Tank hineingedrückt, und aufgrund des grossen Steifigkeitsunterschiedes des sehr steifen Domsockels (ca. 80 mm Wandstärke) im Vergleich zur relativ nachgiebigen Tankwand (ca. 11 mm Wandstärke) kommt es zu grossen Spannungsspitzen genau an der Verbindungsstelle, einer Schweissnaht. Das Risiko, dass hier im Kollisionsfall ein Aufreissen der Schweissnaht austritt, ist daher gross.

Um dieses Problem zu lösen, wurde bereits ein Überrollschutz vorgeschlagen. Aus der RU 2129978 und der RU 2129979 ist ein Überrollschutz bekannt, bei dem am Tank zusätzliche Verstärkungsstreben angeordnet sind. Diese sollen bei einer Kollision ein Hindernis wie ein Deflektor abweisen. Die dabei auftretenden hohen Kräfte sollen über die mechanische Schutzstruktur abgefangen und zum Fahrgestell des Kesselwagens abgeleitet werden. Damit keine Verformung des Tanks eintritt, ist dieser mit ringförmigen Aussteifungen verstärkt. Nachteilig bei dieser Lösung ist, dass bei grossen Kräften auf die Deflektoren an deren Befestigungspunkten grosse lokale Belastungen auf den Tank eingeleitet werden und durch Spannungskonzentrationen die Gefahr von Rissbildung und Ladegutaustritt besteht. In der FR 2745278 werden in ähnlicher Weise zwei schalenartig ausgeformte Deflektoren zum Schutz der Ventile verwendet. Zwischen diesen ist eine Verbindung mit längs der Tankachse verlaufenden Sattelleisten gegeben, auf welcher eine verschiebbare Abdeckung gleiten kann. Nachteilig ist hier, dass sich die Steifigkeit der Schutzkonstruktion am Übergang von den Schalen zu den Sattelleisten sprunghaft verändert. An diesen Stellen kann bei hoher Krafteinwirkung ebenfalls eine punktuelle Belastung auf den Tank auftreten, und es besteht das Risiko der Rissbildung. Ein Nachteil beider vorgenannten Lösungsansätze besteht zudem darin, dass für Kräfte in Querrichtung des Tanks nur eine geringe Schutzwirkung erreicht wird.

Aus der US 3084638 ist ein Überrollschutz bekannt, der aus Stahlrohren besteht, die wie ein Geländer um den Dombereich herum angeordnet sind. Diese Rohre können jedoch äusseren Kräften keinen hohen Widerstand entgegensetzen.

Aus der JP 2008290570 und der JP 7215124 sind demgegenüber rechteckige Schutzrahmen für Tankfahrzeuge bekannt, welche den Dombereich vollständig umfassen und ähnlich einer Mauer einschliessen. Diese sind teilweise doppelwandig ausgeführt, wobei beide Wände direkt auf der Tankwand befestigt sind. Dadurch bilden die Doppelwände gemeinsam mit der Tankwandung ein Hohlprofil. Eine Schutzwirkung wird durch die Geschlossenheit des Rahmens sowohl in Längs- als auch in Querrichtung erzielt. Nachteilig an dieser Lösung ist, dass durch die mittragende Wirkung der Tankwand, vor allem an den nicht abgerundeten Eckbereichen, sehr hohe punktuelle Belastungen in den Tank eingeleitet werden können, verbunden mit der Gefahr der Rissbildung.

Allen bekannten Lösungen ist gemeinsam, dass sie versuchen, Hindernisse nach dem Prinzip eines Deflektors abzuweisen und ihnen möglichst hohen Widerstand entgegenzusetzen. Sie haben das Ziel, den Tank und die Ventile bei Kollisionen mit Hindernissen unverformt und unversehrt zu erhalten. Dies gelingt, wenn das Hindernis im Verhältnis zum Kesselwagen klein und leicht ist oder eine in sich geringe Steifigkeit oder Festigkeit aufweist. Falls die Hindernisse jedoch eine im Verhältnis zum Kesselwagen vergleichbare oder grössere Masse, Festigkeit oder Steifheit aufweisen, z.B. bei Kollisionen mit Bäumen, Gebäuden, oder Brückenpfosten, gelingt es nicht, diese abzuweisen. Dann werden die Schutzkonstruktionen sehr hohen Kräften ausgesetzt, welche sie mehr oder weniger punktförmig in die Tankwandungen einleiten. Die Schutzkonstruktionen selbst und evtl. auch die Tankwandung werden dann beschädigt. Dadurch kann es zu Rissen in der Tankwandung und zum Austritt von Ladegut kommen.

Der Erfindung liegt die Aufgabe zugrunde, einen Überrollschutz zu entwickeln, der die im Dom angeordneten Ventile gegen eine Vielzahl von möglichen Belastungsarten schützt und nach einem Unglücksfall eine problemlose Entleerung des Tanks ermöglicht.

Die Erfindung besteht in den im Anspruch 1 angegebenen Merkmalen. Vorteilhafte Ausgestaltungen ergeben sich aus den abhängigen Ansprüchen.

Die Erfindung schlägt einen verbesserten Überrollschutz vor, bei dem eine hochfeste rahmenartige Struktur um den Dom herum angeordnet wird, die einen Schutzrahmen bildet, der sich bei Belastung wie ein Stempel verhält. Im Unterschied zu den bekannten Lösungen, wo der Überrollschutz an einer möglichst steifen Stelle befestigt wird und ein Nachgeben dieser Befestigung unerwünscht ist, wird der Schutzrahmen bei der vorliegenden Erfindung derart ausgestaltet und am Tank befestigt, dass ein Eindrücken des Schutzrahmens in den Tank möglich ist, wobei darauf geachtet wird, dass dieses Eindrücken möglichst flächig stattfindet. Die Befestigung des Schutzrahmens am Tank erfolgt deshalb über flächige Verbindungen, bevorzugt über vier geradlinige Sattelleisten, deren Dimensionierung und Fertigungstechnologie mit Vorteil identisch ist mit derjenigen, die zur Befestigung des Tanks am Fahrzeugrahmen dient. Der gesamte Mittenbereich des Tanks, um den Dom herum, wird dank der Erfindung bei einer Lasteinleitung als ganzes flächig eingedrückt, wobei der Dom "mitgenommen" wird und damit aus dem Gefahrenbereich "abtaucht". Der Schutzrahmen wirkt also wie ein Stempel, der den Tank im Belastungsfall grossflächig eindrückt und den Mittenbereich mitsamt dem Dom im Tank versenkt. Es wird also im Unglücksfall eine kontrollierte Deformation des Tanks im Bereich des Doms angestrebt.

Der Vorteil der Erfindung besteht darin, dass bei einer grossen Bandbreite an vorstellbaren Gefährdungsszenarien und bei Belastung aus verschiedenen Richtungen stets ein grosser Bereich um den Dom herum flächig eingedrückt wird, wobei Spannungsspitzen an der Befestigungsstelle des Domsockels zum Tank vermieden werden und die Ventile als ganzes aus dem Gefahrenbereich verschoben werden. Die Chance, auch nach schweren Unfällen ein Austreten von Ladegut zu vermeiden, wird verbessert. Die Wahrscheinlichkeit, dass nach solchen Unfällen eine sichere und problemlose Entleerung des beschädigten, aber noch dichten Tanks über das normale Entleerungsventil stattfinden kann, ist stark erhöht.

Der Abstand des Schutzrahmens vom Dom ergibt sich aus den Vorschriften für Arbeitssicherheit, welche eine gewissen Mindestfläche als Arbeitsplattform um den Dom herum definieren. Der Schutzrahmen wurde um diese Mindestfläche herum konzipiert und ersetzt das bisherige Geländer dieser Plattform.

Der erfindungsgemässe Schutzrahmen ist eine biege- und torsionssteife Rahmenstruktur, die vorzugsweise und soweit als möglich als Hohlkörper mit geschlossenem Querschnitt ausgebildet ist, um bei einer punktuellen Lasteinleitung die flächige Eindrückung eines grossen Bereiches des Tanks sicherzustellen. Der Grundriss der Rahmenstruktur verläuft idealerweise oval um den Dom herum. Als fertigungstechnisch optimierte Abwandlung wurde dann eine ans Oval angenäherte Achteckform gefunden. Wenn bei einem Unfall eine Kraft auf den Schutzrahmen einwirkt, dann überträgt und verteilt der Schutzrahmen die Kraft auf vier Sattelleisten, d.h. eine punktuell einwirkende äussere Kraft wird in eine Flächenbelastung umgewandelt, die bewirkt, dass der Tank um den Dom herum flach gedrückt wird, ohne dass der Dom beschädigt wird.

Problematisch erwies sich die Notwendigkeit, diese umlaufende Rahmenstruktur an mindestens einer Stelle zu unterbrechen, um einen niveaugleichen Übergang beim Betreten der Arbeitsplattform um den Dom herum zu gewährleisten. Diese Stelle stellt eine Schwachstelle des Schutzrahmens dar. Es ist vorteilhaft, dies nur an einer Stelle zu tun, die in Fahrzeuglängsrichtung orientiert und möglichst weit vom Dom entfernt angeordnet ist. Da die Platzverhaltnisse für einen Hohlkörper mit geschlossenem Querschnitt an dieser Stelle nicht ausreichen, ist diese Stelle mit Vorteil gebildet durch ein massives, dickwandiges Stück Blech, das eine hohe Biegesteifigkeit aufweist, und links und rechts davon angeordnete, stabile Pfosten. Das Blech wird direkt auf eine querverlaufende Sattelung auf dem Tank abgestützt.

Die Rahmenstruktur besteht mit Vorteil aus abgekanteten und verschweissten Blechen. Die Bleche werden so gewählt, um möglichst viele Kantungen und nur geringe Schweissnahtlängen zu haben. Für die Bleche eignen sich insbesondere Kaltumformstähle nach EN 10149, welche sehr enge Biegeradien zulassen. Damit wird eine Annäherung der Biegekanten an Eck-Verbindungen, mit fast gleichwertiger Steifigkeit, und mit einem komplexen, energiereichen Verformungsverhalten erreicht. Die hohe Festigkeit des Stahls ermöglicht zudem Gewichtseinsparungen.

Weitere Aspekte der Konstruktion der Rahmenstruktur bestehen darin, Füsse der Rahmenstruktur mit begrenzter Steifheit auszubilden und andererseits die Rahmenstruktur zusammenzusetzen aus zwei Längs- und zwei Quersektionen, welche an Sattelleisten am Tank befestigt sind, und vier Diagonalsektionen, welche die Längs- und Quersektionen miteinander verbinden. Die Längs- und Quersektionen und die Diagonalsektionen bilden im Grundriss ein Achteck. Bei Belastung wird bewusst eine gelenkähnliche Deformation der Befestigung entlang der Längs-Sattelleisten akzeptiert, und eine Verwindungsdeformation der Diagonalsektionen der von oben betrachtet achteckförmigen Rahmenkonstruktion. Dadurch wird die Abflachung des Tanks unterstützt, unter gleichzeitiger Eindtückung des Mittelbereichs des Schutzrahmens gegenüber dem Aussenbereich mit den Füssen. Bei Belastung kann sich der Schutzrahmen ähnlich einem Hut seitlich einrollen. Um ein lokales Eindrücken der Füsse in den Tank und damit eine mögliche Penetration des Tanks zu vermeiden, sind die Füsse gezielt nachgiebig gestaltet.

Bei einem seitlichen Überrollen findet die Stempelbewegung "fliessend" während des Abrollens statt, mit einer gleichzeitigen, kontrollierten Deformation des Schutzrahmens. Man kann den Schutzrahmen deshalb als intelligentes, sich der äusseren Lasteinleitung selbst anpassendes Stempelwerkzeug bezeichnen.

Die Erfindung wird nachfolgend anhand eines Ausführungsbeispiels und anhand der Zeichnung näher erläutert.
- Fig. 1: zeigt Teile eines Kesselwagens,
- Fig. 2: zeigt
- Fig. 3, 4: zeigen ein Ausführungsbeispiel eines Schutzrahmens in perspektivischer Ansicht aus verschiedenen Richtungen,
- Fig. 5: den Schutzrahmen in Aufsicht, und
- Fig. 6: zeigt den Schutzrahmen in einer seitlichen Ansicht.

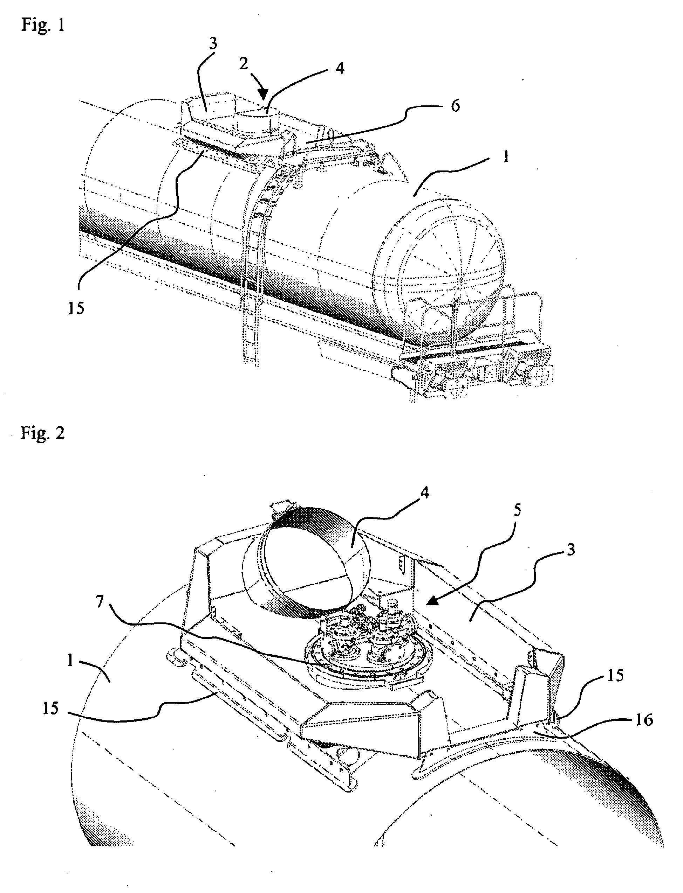

Die Fig. 1 zeigt Teile eines Kesselwagens in perspektivischer Ansicht. Der Kesselwagen umfasst einen Tank 1 mit einem oben auf dem Tank 1 angebrachten Dom 2 und einem den Dom 2 schützenden, biege- und torsionssteifen Schutzrahmen 3. Der Dom 2 enthält eine Abdeckung 4, in deren Innerem Ventile 5 (Fig. 2) für die Befüllung und Entleerung des Tanks 1 angeordnet sind. Der Dom 2 ist umgeben von einer Arbeitsplattform, die über eine Leiter und einen niveaugleichen Zugang 6 betretbar ist. Der Schutzrahmen 3 umgibt die Arbeitsplattform und ist über flächige, im Abstand zum Dom 2 angeordnete Verbindungen am Tank 1 befestigt. Der Schutzrahmen 3 ist mit Vorteil als biege- und verwindungssteife Rahmenstruktur ausgebildet. Der Schutzrahmen 3 und die flächige Befestigung am Tank 1 ergeben einen hochwirksamen Schutz, inklusive Überrollschutz, gegen verschiedene Gefährdungen.

Die Fig. 2 zeigt ausschnittsweise den Dom 2 und den im Abstand zum Dom 2 am Tank 1 befestigten Schutzrahmen 3 in vergrösserter Darstellung. Die Abdeckung 4 ist in dieser Figur aufgeklappt, so dass der Domsockel 7 mit den Ventilen 5 zugänglich ist.

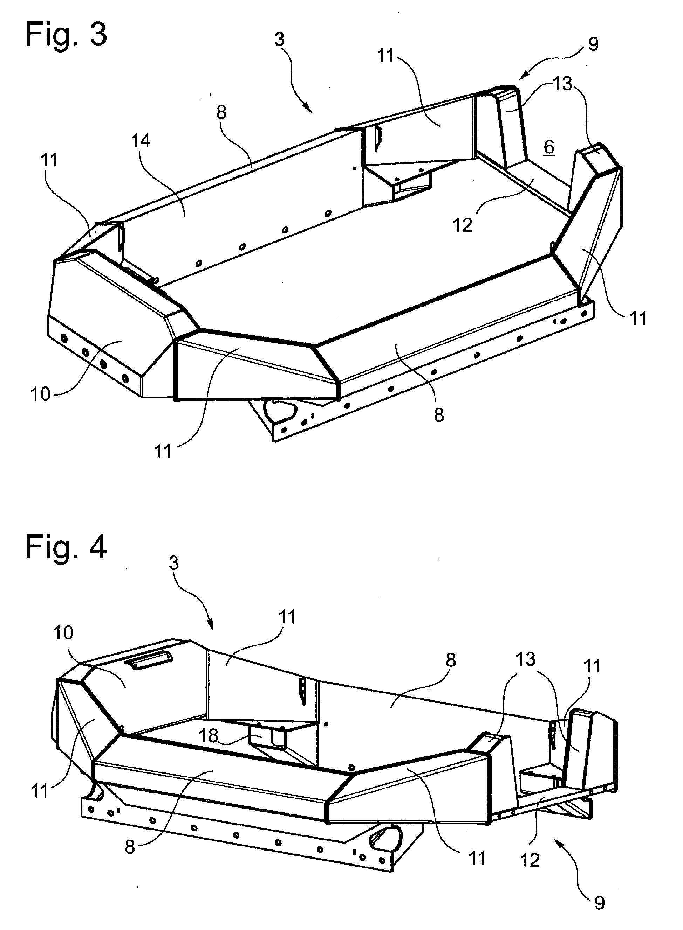

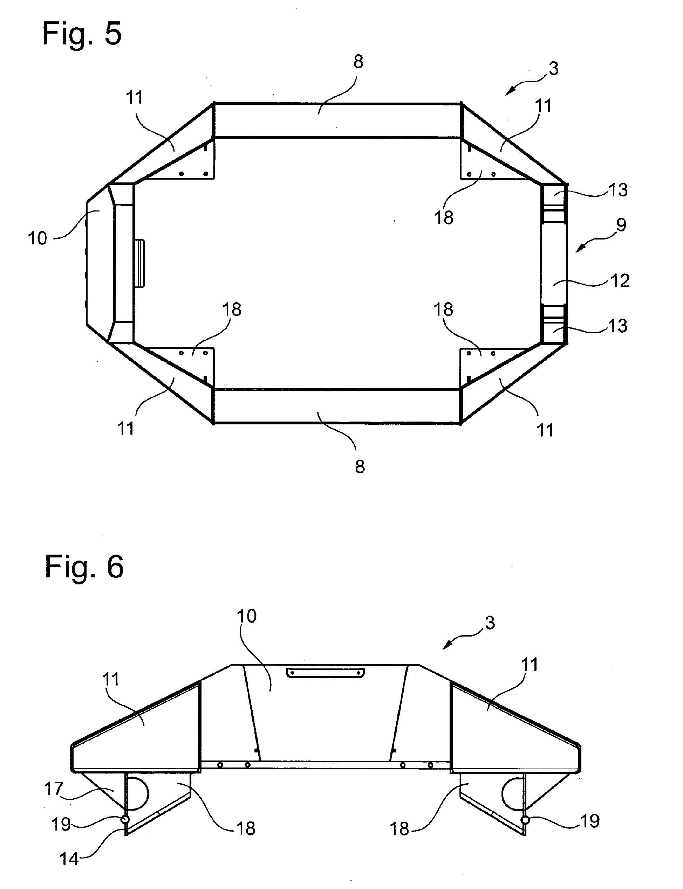

Die Fig. 3 und 4 zeigen ein bevorzugtes Ausführungsbeispiel des Schutzrahmens 3 in perspektivischer Ansicht aus verschiedenen Richtungen, die Fig. 5 zeigt den Schutzrahmen 3 in Aufsicht. Die ideale Form des Schutzrahmens 3 wäre ein um den Dom 2 herum angeordnetes, in Längsrichtung des Tanks 1 ausgerichtetes Oval. Aus fertigungstechnischen Gründen wird die ovale Form durch ein Achteck angenähert: Der Schutzrahmen 3 ist gebildet durch zwei Längssektionen 8, zwei Quersektionen 9 und 100 und vier Diagonalsektionen 11, die die Längssektionen 8 und die Quersektionen 9, 10 miteinander verbinden. Alle diese Sektionen, mit Ausnahme der Quersektion 9, sind vorzugsweise als Hohlkörper mit geschlossenem Querschnitt ausgebildet, da ein solches Profil eine hohe Biege- und Torsionssteifigkeit bei minimalem Gewicht bietet. Die Quersektion 9 enthält den Zugang 6, der den niveaugleichen Zutritt zur Arbeitsplattform ermöglicht. Diese Quersektion 9 besteht aus einem massiven Stück Blech 12 und beidseitig des Zugangs 6 angeordneten Pfosten 13. Die Pfosten 13 sind ebenfalls als Hohlprofil mit geschlossenem Querschnitt ausgeführt. Die beiden Längssektionen 8 umfassen je eine nach unten vorstehende Wand 14, die an einer Längs-Sattelleiste 15 (Fig. 1, 2) befestigt ist, die im Abstand zum Dom 2 im oberen, mittleren Bereich des Tanks 1 angebracht ist. Die beiden Quersektionen 9, 10 sind an Quer-Sattelleisten 16 (Fig. 2) befestigt. Wie aus den Fig. 1 und 2 ersichtlich ist, sind die Längs-Sattelleiste(n) 15 und die Quer-Sattelleisten 16 in keiner Art und Weise mit dem Dom 2 verbunden. Die Fig. 6 zeigt den Schutzrahmen 3 in seitlicher Ansicht mit Blick auf die Quersektion 10. Darin ist ersichtlich, dass ein Teil der Wand 14 durch ein weiteres Hohlprofil 17 verstärkt ist. Der Schutzrahmen 3 umfasst vier Füsse 18, die in geringem Abstand zum Tank 1 angeordnet sind oder auf dem Tank 1 aufliegen.

Bei einem Unfall, bei dem der Schutzrahmen 3 an irgendeiner Stelle belastet wird, wird die lokal oder auch grossflächig einwirkende Kraft auf die beiden Längs-Sattelleisten 15 und auf die beiden Quer-Sattelleisten 16 übertragen. Weil die Sattelleisten 15, 16 mittels flächigen Verbindungen am Tank 1 befestigt sind, wird die äussere Kraft auf die von diesen Verbindungen belegte Fläche verteilt. Dies führt als erstes dazu, dass der Tank 1 um den Dom 2 herum flach gedrückt wird. Wenn die Belastung ein bestimmtes Mass überschreitet, dann kommen die Füsse 18 in Kontakt mit dem Tank 1 und drücken ebenfalls auf den Tank 1. Die Füsse 18 sind deshalb so ausgestaltet, dass sie bei Belastung nachgiebig sind, so dass sie einknicken und dann der Schutzrahmen 3 selbst flächig auf den Tank 1 zu drücken beginnt. Auf diese Weise wird vermieden, dass die Füsse 18 den Tank 1 lokal durchdringen könnten. Damit der Schutzrahmen 3 bei einem Überrollen des Tanks 1 den Tank 1 nicht an der entsprechenden Längs-Sattelleiste 15 eindrückt, weil die äussere Kraft in diesem Fall hauptsächlich auf nur diese eine Längs-Sattelleiste 15 verteilt wird, wird zudem bewusst eine gelenkähnliche Deformation der Wände 14 entlang einer Achse 19 akzeptiert, die im Bereich zwischen der Längs-Sattelleiste 15 und dem Hohlprofil 17 verläuft. Diese Deformation führt dazu, dass die entsprechende Längssektion ihrerseits eine Drehbewegung um eine parallel zu ihrer Längsachse verlaufende Achse ausführt, was wiederum dazu führt, dass die an diese Längssektion anschliessenden Diagonalsektionen 11 verwunden werden. Um dies zu ermöglichen, ist die Torsionssteifigkeit der Diagonalsektionen 11 geringer als die Torsionssteifigkeit der Längssektionen 8. Bei einem Überrollen werden also zunächst die Übergangsstellen zwischen der Befestigung am Tank 1 und dem Schutzrahmen 3 deformiert, so dass der Schutzrahmen 3 selbst flächig auf den Tank 1 drückt. Auf diese Weise wird die Fläche, die den Tank 1 belastet, vergrössert, und eine Penetration des Tanks 1 im Bereich der Längs-Sattelleisten 15 verhindert.

Der Schutzrahmen 3 wirkt also wie ein Stempel, der den Tank 1 im Belastungsfall unabhängig von der Art der Belastung grossflächig eindrückt und den Mittenbereich mitsamt dem Dom 2 und den Ventilen im Tank 1 versenkt.

## Patentansprüche

1. Schienengebundener Kesselwagen, mit einem Tank (1) und einem in einem oberen Bereich des Tanks (1) angebrachten Dom (2) sowie einem um den Dom (2) herum angeordneten Schutzrahmen (3), **dadurch gekennzeichnet, dass** der Schutzrahmen (3) als biege- und torsionssteife Rahmenstruktur ausgebildet ist, die mittels Längs-Sattelleisten (15) und Quer-Sattelleisten (16) am Tank (1) befestigt ist, dass die Sattelleisten (15, 16) über flächige, im Abstand zum Dom (2) angeordnete Verbindungen am Tank (1) befestigt sind, und dass Übergangsstellen zwischen dem Schutzrahmen (3) und den Längs-Sattelleisten (15) um eine parallel zu den Längs-Sattelleisten (15) verlaufende Achse (19) deformierbar sind, so dass bei einem Überrollen zunächst die Übergangsstellen deformiert werden, so dass dann der Schutzrahmen (3) selbst flächig auf den Tank (1) drückt.

2. Schienengebundener Kesselwagen nach Anspruch 1, **dadurch gekennzeichnet, dass** der Schutzrahmen (3) zwei Längssektionen (8), zwei Quersektionen (9, 10) und vier Diagonalsektionen (11) aufweist, die die Längssektionen (8) und die Quersektionen (9, 10) miteinander verbinden, und dass die Längssektionen (8) und die Quersektionen (9, 10) an den Sattelleisten (15, 16) befestigt sind.

3. Schienengebundener Kesselwagen nach Anspruch 1 oder 2, **dadurch gekennzeichnet, dass** der Schutzrahmen (3) mit Ausnahme eines Zugangs (6) zum Dom (2) als Hohlkörper mit geschlossenem Querschnitt ausgebildet ist.

4. Schienengebundener Kesselwagen nach Anspruch 2 oder 3, **dadurch gekennzeichnet, dass** die Torsionssteifigkeit der Diagonalsektionen (11) geringer ist als die Torsionssteifigkeit der Längssektionen (8).

## Claims

1. Rail tank car, having a tank (1) and a dome (2), which is attached in an upper region of the tank (1), and a protective frame (3), which is arranged around the dome (2), **characterized in that** the protective frame (3) is formed as a bending-resistant and torsion-resistant frame structure, which is fastened by means of longitudinal saddle brackets (15) and transverse saddle brackets (16) on the tank (1), that the saddle brackets (15, 16) are fastened on the tank (1) via planar connections, which are arranged at a distance to the dome (2), and that transition points between the protective frame (3) and the longitudinal saddle brackets (15) are deformable about an axis (19) extending in parallel to the longitudinal saddle brackets (15), so that in the event of a rollover, firstly the transition points are deformed, so that then the protective frame (3) itself presses flatly against the tank (1).

2. Rail tank car according to claim 1, **characterized in that** the protective frame (3) has two longitudinal sections (8), two transverse sections (9, 10), and four diagonal sections (11), which connect the longitudinal sections (8) and the transverse sections (9, 10) to one another, and that the longitudinal sections (8) and the transverse sections (9, 10) are fastened on the saddle brackets (15, 16).

3. Rail tank car according to claim 1 or 2, **characterized in that** the protective frame (3) is formed, with the exception of an access (6) to the dome (2), as a hollow body having a closed cross section.

4. Rail tank car according to claim 2 or 3, **characterized in that** the torsional stiffness of the diagonal sections (11) is less than the torsional stiffness of the longitudinal sections (8).

## Revendications

1. Wagon-citerne sur rails, avec une cuve (1) et un dôme (2) disposé dans une partie supérieure de la cuve (1) et avec un cadre de protection (3) disposé autour du dôme (2), **caractérisé en ce que** le cadre de protection (3) est formé comme une structure de cadre rigide en flexion et en torsion, qui est fixée à la cuve (1) au moyen de barres de selle longitudinales (15) et de barres de selle transversales (16), **en ce que** les barres de selle (15, 16) sont fixées sur la cuve (1) par des liaisons plates disposées à distance du dôme (2) et **en ce que** des points de transition entre le cadre de protection (3) et les barres de selle longitudinales (15) sont déformables autour d'un axe (19) parallèle aux barres de selle longitudinales (15), de sorte que lors d'un retournement, les points de transition sont les premiers à être déformés, de sorte que le cadre de protection (3) lui-même appuie alors à plat sur la cuve (1).

2. Wagon-citerne sur rails selon la revendication 1, **caractérisé en ce que** le cadre de protection (3) comprend deux sections longitudinales (8), deux sections transversales (9, 10) et quatre sections diagonales (11) reliant les sections longitudinales (8) et les sections transversales (9, 10) entre elles, et **en ce que** les sections longitudinales (8) et les sections transversales (9, 10) sont fixées sur les barres de selle (15, 16).

3. Wagon-citerne sur rails selon la revendication 1 ou 2, **caractérisé en ce que** le cadre de protection (3) est formé, à l'exception d'un accès (6) au dôme (2), comme un corps creux à section fermée.

4. Wagon-citerne sur rails selon la revendication 2 ou 3, **caractérisé en ce que** la rigidité en torsion des sections diagonales (11) est inférieure à la rigidité en torsion des sections longitudinales (8).
